# EUROPÄISCHE PATENTSCHRIFT

(11) **EP 4 118 510 B1**
(45) Veröffentlichungstag und Bekanntmachung des Hinweises auf die Patenterteilung: **31.01.2024**
(21) Anmeldenummer: 21711838.9
(22) Anmeldetag: 10.03.2021
(51) Int. Cl.: G05D 16/06, G01M 3/28

(54) **DRUCKMINDERER**
PRESSURE REDUCER
DÉTENDEUR

(30) Priorität: 13.03.2020 DE 102020107027
(43) Veröffentlichungstag der Anmeldung: 18.01.2023
(73) Patentinhaber: Pittway Sarl, 1180 Rolle (CH)
(72) Erfinder: TASSER, Peter, 69412 Eberbach (DE)
(74) Vertreter: Sturm, Christoph
(86) Internationale Anmeldenummer: PCT/EP2021/056079
(87) Internationale Veröffentlichungsnummer: WO 2021/180802

(56) Entgegenhaltungen:
- EP-A1- 1 857 905
- DE-A1-102018 205 016

## Beschreibung

Die vorliegende Beschreibung betrifft Druckminderer wie nach dem Oberbegriff des Anspruchs 1.

Druckminderer finden vorzugsweise in Industrieanlagen und Wasserversorgungsanlagen von Häusern oder Gebäuden Anwendung, um bei einem schwankenden Eingangsdruck einen konstanten Ausgangsdruck zur Verfügung zu stellen. Die Installation eines Druckminderers erfolgt hierbei vorzugsweise in einem Keller eines Gebäudes oder in einem Versorgungsschacht, sodass die Gefahr des Einfrierens des Druckminderers nicht besteht. Die Notwendigkeit, einen konstanten Fluiddruck oder Wasserdruck zur Verfügung zu stellen, besteht aber nicht nur bei Industrieanlagen und Wasserversorgungsanlagen, vielmehr gibt es auch andere Anwendungsgebiete die mit einem konstanten Fluiddruck oder Wasserdruck versorgt werden müssen. Im Freien installierte Druckminderer sind bei Frost außer Betrieb gesetzt, wozu eine Entleerung derselben erfolgt.

Ein Druckminderer ist aus der DE 195 39 239 C2 bekannt. So umfasst der aus diesem Stand der Technik bekannte Druckminderer ein Gehäuse und ein in dem Gehäuse positioniertes Ventil, wobei das Ventil in geschlossenem Zustand desselben einen Vordruckraum des Gehäuses von einem Hinterdruckraum des Gehäuses trennt und in geöffnetem Zustand desselben den Vordruckraum und den Hinterdruckraum verbindet. Das Ventil des aus diesem Stand der Technik bekannten Druckminderers verfügt über eine auf einen Ventilstößel einwirkende Membran, auf die unter Bereitstellung einer Druckminderer-Funktion einerseits eine in Öffnungsrichtung des Ventils wirkende Federkraft eines Federelements und andererseits eine in Schließrichtung des Ventils wirkende, vom im Hinterdruckraum herrschenden Druck abhängige Kraft einwirkt.

Nach der DE 195 39 239 C2 ist am Ventilstößel ein Ventilkörper befestigt, der mit einem Dichtelement derart zusammenwirkt, dass in geschlossenem Zustand des Ventils der Ventilkörper und das Dichtelement dichtend aneinander anliegen, und dass in geöffnetem Zustand des Ventils der Ventilkörper vom Dichtelement entfernt ist und einen Strömungsbereich zwischen dem Ventilkörper und dem Dichtelement freigibt.

DE 10 2018 205 016 A1 offenbart einen Druckminderer nach dem Oberbegriff des Anspruch 1.

DE 10 2016 122 661 A1 offenbart ein Druckreduzierventil.

DE 10 2013 216 673 A1 offenbart ein Speicherkammerventil.

US 8 607 818 B2 offenbart ein Druckentlastungsventil.

EP 1 857 905 A1 offenbart eine Gas-Reguliervorrichtung und einen Gas-Durchflussmesser mit einem Druckreduzierer.

Insbesondere bei einem in einem Gebäude oder einem Haus installierten Druckminderer können dann, wenn in der Wasserversorgungsanlage stromabwärts des Druckminderers eine Leckagestelle vorliegt, durch die Leckage erhebliche Schäden verursacht werden. Bislang bereitet es Schwierigkeiten, eine derartige Leckage, die sich stromabwärts eines Druckminderers ausbilden kann, sicher zu detektieren.

Aus der EP 3 239 682 A1 ist eine Vorrichtung zur Detektion von Leckage in einer Wasserversorgungsanlage bekannt. In diesem Stand der Technik wird vorgeschlagen, an der Leckagedetektionsvorrichtung die Bewegung eines Stößels mithilfe eines Sensors zu detektieren und abhängig von der Bewegung des Stößels auf das Vorliegen einer Leckage zu schließen.

Bei einem Druckminderer besteht das Problem, dass kleine Leckagen nur kleine Bewegungen des Ventilstößels verursachen, die nur schwer oder nur mit großem Aufwand detektierbar sind.

Der Erfindung liegt die Aufgabe zu Grunde, einen neuartigen Druckminderer zu schaffen, bei welchem durch eine Leckage verursachte Bewegungen des Ventilstößels leichter oder mit geringerem Aufwand detektierbar sind.

Diese Aufgabe wird durch einen Druckminderer gemäß Anspruch 1 gelöst.

Erfindungsgemäß ist die Dichtfläche in Radialrichtung wirksam und der an dem Ventilstößel befestigte Ventilkörper ist unter Ausbildung der in Radialrichtung wirksamen Dichtfläche zylindrisch oder hohlzylindrisch oder konisch konturiert.

Die Dichtfläche des an dem Ventilstößel befestigten Ventilkörpers ist erfindungsgemäß an mindestens einer Umfangsposition über mindestens einen Strömungskanal derart unterbrochen, dass abhängig von einem im Hinterdruckraum herrschenden Druckverlust, nämlich abhängig von einer durch eine Fluidleckage oder durch einen regulären Fluidverbrauch verursachten Druckänderung im Hinterdruckraum, entweder das Dichtelement an der Dichtfläche anliegt bzw. in Radialrichtung gesehen gegen die Dichtfläche drückt und einen Strömungsbereich zwischen dem Dichtelement und der Dichtfläche einschließlich des jeweiligen Strömungskanals bzw. des mindestens einen Strömungskanals vollständig verschließt, nämlich dann, weder eine Fluidleckage noch ein regulärer Fluidverbrauch vorliegt und daher die Druckänderung im Hinterdruckraum kleiner als ein unterer Grenzwert ist, oder das Dichtelement von der Dichtfläche entfernt ist und den Strömungsbereich einschließlich des jeweiligen Strömungskanals bzw. des mindestens einen Strömungskanals vollständig freigibt, nämlich dann, wenn ein regulärer Fluidverbrauch vorliegt und daher die Druckänderung im Hinterdruckraum größer als ein oberer Grenzwert ist, oder das Dichtelement an der Dichtfläche anliegt bzw. in Radialrichtung gesehen gegen die Dichtfläche drückt und den Strömungsbereich ausschließlich über den jeweiligen Strömungskanal bzw. den mindestens einen Strömungskanal teilweise freigibt, nämlich dann, wenn kein regulärer Fluidverbrauch sondern lediglich eine Fluidleckage vorliegt und daher die Druckänderung im Hinterdruckraum größer als der untere Grenzwert und kleiner als der obere Grenzwert ist.

Die Erfindung verfügt über den Vorteil, dass dann, wenn eine Leckage eine relativ geringe Druckänderung im Hinterdruckraum verursacht, der Ventilstößel des Ventils des Druckminderers sich in größerem Umfang bewegt als bei aus dem Stand der Technik bekannten Druckminderern, sodass eine durch eine Leckage verursachte Bewegung des Ventilstößels leichter oder mit geringerem Aufwand detektiert werden kann.

Dann, wenn im Hinterdruckraum kein Druckverlust oder ein Druckverlust herrscht, der kleiner als ein unterer Grenzwert ist, liegt das Dichtelement an der Dichtfläche an und verschließt den Strömungsbereich zwischen dem Dichtelement und der Dichtfläche einschließlich des jeweiligen Strömungskanals bzw. des mindestens einen Strömungskanals vollständig.

Dann, wenn im Hinterdruckraum ein Druckverlust herrscht, der größer als ein oberer Grenzwert ist, ist das Dichtelement von der Dichtfläche entfernt und gibt den Strömungsbereich zwischen dem Dichtelement und der Dichtfläche einschließlich des jeweiligen Strömungskanals bzw. des mindestens einen Strömungskanals vollständig frei.

Dann, wenn im Hinterdruckraum ein Druckverlust herrscht, der größer als der untere Grenzwert und kleiner als der obere Grenzwert ist, liegt das Dichtelement an der Dichtfläche an und gibt den Strömungsbereich zwischen dem Dichtelement und der Dichtfläche ausschließlich über den jeweiligen Strömungs-kanal teilweise frei.

Nach einer vorteilhaften Weiterbildung der Erfindung drückt das Dichtelement radial innen gegen eine radial innenliegende Dichtfläche des Ventilkörpers. Diese Ausführung ist besonders bevorzugt, um die Erfindung konstruktiv einfach umzusetzen.

Nach einer vorteilhaften Weiterbildung der Erfindung erstreckt sich der jeweilige Strömungskanal bzw. der mindestens eine Strömungskanal, der die Dichtfläche an einer jeweiligen Umfangsposition unterbricht, in Radialrichtung. Auch dies dient der einfachen konstruktiven Umsetzung der Erfindung.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: einen Querschnitt durch einen erfindungsgemäßen Druckminderer;
- Fig. 2: das Detail Z der Fig. 1 in einem ersten Zustand;
- Fig. 3: das Detail Z der Fig. 1 in einem zweiten Zustand;
- Fig. 4: das Detail Z der Fig. 1 in einem dritten Zustand;
- Fig. 5: ein Diagramm zur Verdeutlichung der Erfindung;
- Fig. 6: eine erste mögliche Querschnittkonturierung eines Strömungskanals des Druckminderers;
- Fig. 7: eine zweite mögliche Querschnittkonturierung eines Strömungskanals des Druckminderers;
- Fig. 8: eine dritte mögliche Querschnittkonturierung eines Strömungskanals des Druckminderers; und
- Fig. 9: eine vierte mögliche Querschnittkonturierung eines Strömungskanals des Druckminderers.

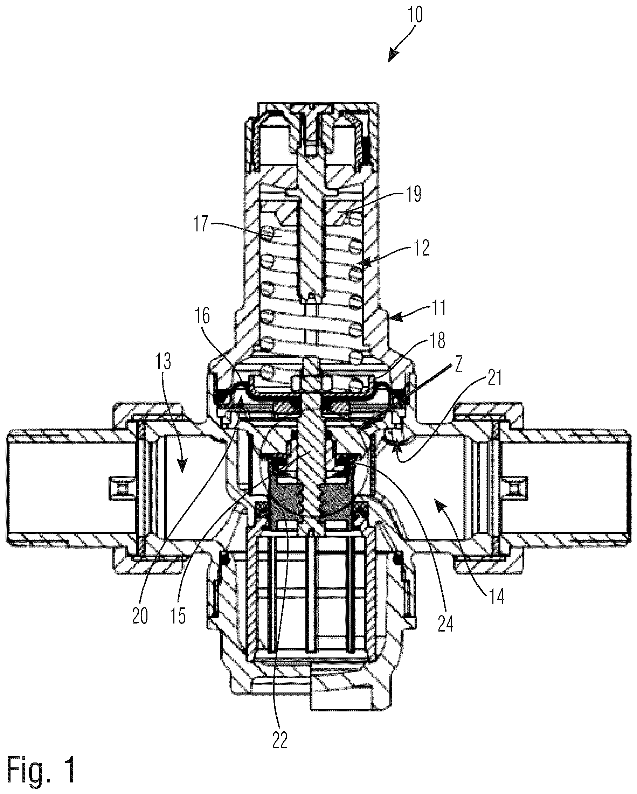

Fig. 1 zeigt einen Querschnitt durch ein Ausführungsbeispiel eines erfindungsgemäßen Druckminderers 10. Der Druckminderer 10 verfügt über ein Gehäuse 11, wobei im Gehäuse 11 ein Ventil 12 positioniert ist. Das Ventil 12 trennt im geschlossenen Zustand einen Vordruckraum 13 des Gehäuses 11 von einem Hinterdruckraum 14 des Gehäuses 11, wobei im geöffneten Zustand des Ventils 12 der Vordruckraum 13 und der Hinterdruckraum 14 gekoppelt sind.

Das Ventil 12 des Druckminderers 10 verfügt über einen Ventilstößel 15, an welchem eine Membran 16 angreift. Auf die Membran 16 wirkt eine Federkraft ein, die von einem Federelement 17 bereitgestellt wird, wobei das Federelement 17 gemäß Fig. 1 zwischen zwei Federtellern 18, 19 angeordnet ist. Ein erster Federteller 18 ist der Membran 16 zugewandt. Ein zweiter Federteller 19 ist von der Membran 16 abgewandt. Der erste Federteller 18 und die Membran 16 sind aneinander befestigt.

Auf die Membran 16 wirkt zusätzlich zu der Federkraft des Federelements 17, die in Öffnungsrichtung des Ventils 12 wirkt, eine Kraft ein, die in Schließrichtung des Ventils 12 des Druckminderers 10 wirkt, wobei diese Kraft abhängig von einem Druck ist, der in einem von der Membran 16 begrenzten Druckraum 20 herrscht.

Dieser im Druckraum 20 herrschende Druck bzw. die von diesem Druck abhängige und in Schließrichtung des Ventils 12 des Druckminderers 10 wirkende Kraft ist von dem im Hinterdruckraum 14 herrschenden Druck abhängig. Druckraum 20 und Hinterdruckraum 14 sind über eine Druckleitung 21 gekoppelt.

An dem Ventilstößel 15 greift nicht nur die Membran 16 an, sondern vielmehr auch ein Ventilkörper 22. Der Ventilkörper 22 weist eine Dichtfläche 23 auf, die mit einem Dichtelement 24 zusammenwirkt.

Die Dichtfläche 23 des am Ventilstößel 15 befestigten Ventilkörpers 22 wirkt derart mit dem Dichtelement 24 zusammen, dass im geschlossenen Zustand des Ventils 12 das Dichtelement 24 an der Dichtfläche 23 dichtend anliegt und in Radialrichtung gegen die Dichtfläche 23 drückt.

In geöffnetem Zustand des Ventils 12 hingegen ist das Dichtelement 24 von der Dichtfläche 23 entfernt und liegt nicht an derselben an, wobei in geöffnetem Zustand des Ventils 12 ein Strömungsbereich 25 zwischen dem Dichtelement 24 und der Dichtfläche 23 des Ventilkörpers 22 freigegeben ist.

Im Sinne der hier vorliegenden Erfindung ist der an dem Ventilstößel 15 befestigte Ventilkörper 22 unter Ausbildung einer sich in Radialrichtung wirksamen Dichtfläche 23 zylindrisch oder hohlzylindrisch oder konisch konturiert.

Im gezeigten Ausführungsbeispiel ist der Ventilkörper 22 hohlzylindrisch konturiert.

Die in Radialrichtung wirksame Dichtfläche 23 desselben ist radial innen am Ventilkörper 22 ausgebildet, sodass dann bei geschlossenem Ventil 12 das Dichtelement 24 radial innen gegen die radial innenliegende Dichtfläche 23 des Ventilkörpers 22 drückt.

Die Dichtfläche 23 des am Ventilstößel 15 befestigten Ventilkörpers 22 ist an mindestens einer Umfangsposition des Ventilkörpers 22 über einen Strömungskanal 26 unterbrochen, derart, dass abhängig von einem im Hinterdruckraum 14 herrschenden Druckverlust entweder das Dichtelement 24 an der Dichtfläche anliegt und in Radialrichtung gesehen gegen die Dichtfläche 23 drückt und den Strömungsbereich 25 zwischen dem Dichtelement 24 und der Dichtfläche 23 einschließlich des jeweiligen Strömungskanals 26 vollständig verschließt, oder das Dichtelement 24 von der Dichtfläche 23 entfernt ist und den Strömungsbereich 25 einschließlich des jeweiligen Strömungskanals 26 vollständig freigibt, oder das Dichtelement 24 an der Dichtfläche anliegt und in Radialrichtung gesehen gegen die Dichtfläche 23 drückt und den Strömungsbereich 25 ausschließlich über den jeweiligen Strömungskanal 26 teilweise freigibt.

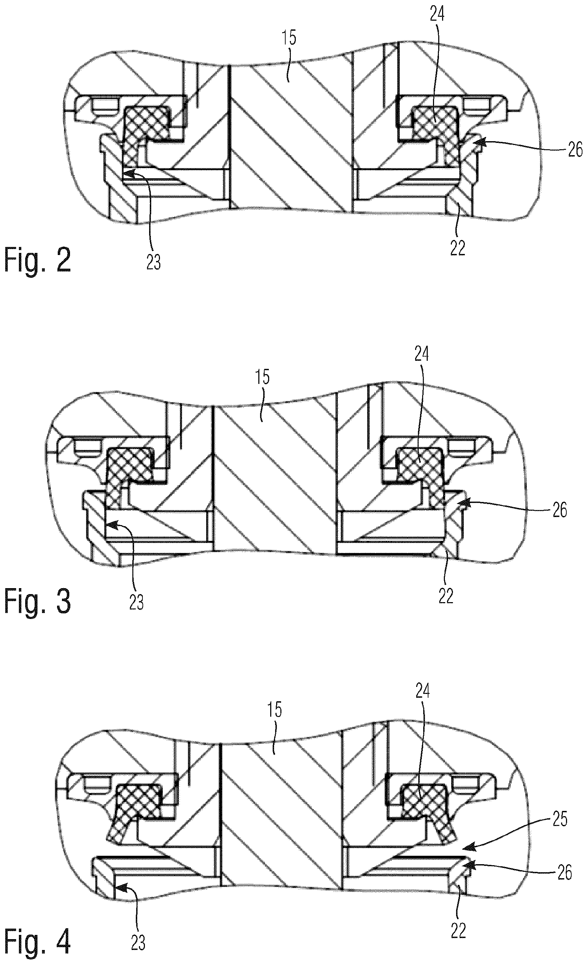

Dann, wenn im Hinterdruckraum 14 kein Druckverlust oder ein Druckverlust herrscht, der kleiner als ein unterer Grenzwert ist, liegt das Dichtelement 24 an der Dichtfläche 23 vollumfänglich an und verschließt den Strömungsbereich 25 zwischen dem Dichtelement 24 und der Dichtfläche 23 einschließlich des jeweiligen Strömungskanals 26 vollständig. Dies ist in Fig. 2 gezeigt.

Dann hingegen, wenn wie in Fig. 4 gezeigt, im Hinterdruckraum 14 ein Druckverlust herrscht, der größer als ein oberer Grenzwert ist, ist das Dichtelement 24 von der Dichtfläche 23 des Ventilkörpers 22 entfernt bzw. abgehoben und gibt den Strömungsbereich 25 zwischen dem Dichtelement 24 und der Dichtfläche 23 einschließlich des jeweiligen Strömungskanals 26 vollständig frei.

Dann, wenn im Hinterdruckraum 14 ein Druckverlust herrscht, der größer als der untere Grenzwert und kleiner als der obere Grenzwert ist, liegt das Dichtelement 24 an der Dichtfläche 23 an, gibt jedoch den Strömungsbereich zwischen dem Dichtelement 24 und der Dichtfläche 23 teilweise frei, nämlich ausschließlich über den jeweiligen Strömungskanal 26, welcher die Dichtfläche 23 an mindestens einer Umfangsposition unterbricht. Dies ist in Fig. 3 gezeigt.

Das Ventil 12 des Druckminderers 10 nimmt den Zustand der Fig. 2 dann ein, wenn im Hinterdruckraum 14 kein Druckverlust herrscht, wenn also weder ein regulärer Fluidverbrauch oder Wasserverbrauch vorliegt noch eine Fluidleckage oder Wasserleckage stromabwärts des Hinterdruckraums 14.

Dann, wenn ein regulärer Fluidverbrauch oder Wasserverbrauch vorliegt, nimmt das Ventil 12 des Druckminderers 10 den Zustand der Fig. 4 ein, durch eine Relativbewegung des am Ventilstößel 15 befestigten Ventilkörpers 22 relativ zum Dichtelement 24 ist das Dichtelement 24 von der Dichtfläche 23 entfernt und gibt so Strömungsbereich 25 vollständig frei.

Liegt hingegen kein regulärer Fluidverbrauch oder Wasserverbrauch vor, sondern lediglich eine Leckage oder eine sehr geringe Entnahme an Fluid oder Wasser stromabwärts des Hinterdruckraums 14, so nimmt das Ventil 12 des erfindungsgemäßen Druckminderers 10 den Zustand der Fig. 3 ein. In diesem Fall liegt das Dichtelement 24 noch an der Dichtfläche 23 des Ventilkörpers 22 an, durch eine Relativbewegung zwischen dem Ventilkörper 22 und dem Dichtelement 24 gibt das Dichtelement 24 jedoch mindestens einen Strömungskanal 26 frei, welcher an einer jeweiligen Umfangsposition die Dichtfläche 23 unterbricht. Sollte demnach eine Leckage auftreten, so kann über den Strömungskanal 26 eine Strömung erfolgen, wodurch im Vergleich zu aus dem Stand der Technik bekannten Druckminderern eine relativ große Bewegung des Ventilstößels 15 verursacht wird, die mithilfe eines dem Ventilstößel 15 zugeordneten, nicht gezeigten Sensors erfasst und detektiert werden kann.

Es sei angemerkt, dass bei einer Leckage im Gegensatz zu einem regulären Fluidverbrauch oder Wasserverbrauch eine leckagebedingte Fluidentnahme oder Wasserentnahme ungewollt kontinuierlich erfolgt, da über eine Leckagestelle dauerhaft Fluid oder Wasser entweicht. Der Ventilkörper 22 des Druckminderers 10 regelt sich leckageabhängig auf eine entsprechende Position ein, welche den leckabedingten Druckverlust im Hinterdruckraum 14 ausgleicht und eine definierte Bewegung bzw. einen definierten Hub des Ventilstößels 15 verursacht, die bzw. der mithilfe des dem Ventilstößel 15 zugeordneten, nicht gezeigten Sensors erfasst und detektiert werden kann.

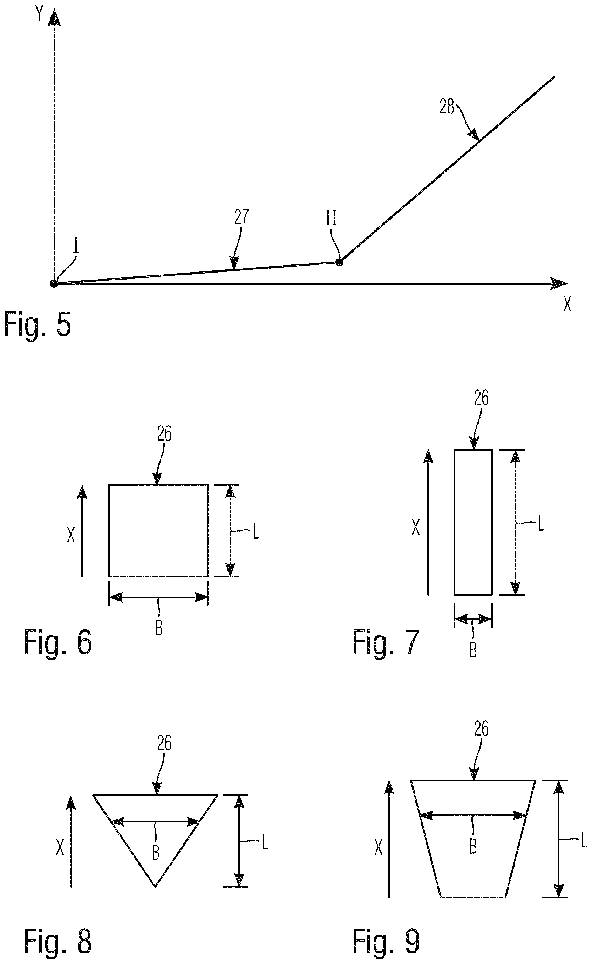

Fig. 5 zeigt ein Diagramm zur weiteren Verdeutlichung der Erfindung. In Fig. 4 ist auf der horizontalen Achse die Öffnungsbewegung bzw. der Öffnungshub X des Ventilstößels 15 und auf der vertikalen Achse Y eine Fluidentnahme oder Wasserentnahme aus dem Hinterdruckraum 14 gezeigt.

Dann, wenn weder ein regulärer Fluidverbrauch oder Wasserverbrauch noch eine Fluidleckage oder Wasserleckage stromabwärts des Hinterdruckraums 14 vorliegt, wenn also das Ventil 12 des Druckminderers 10 den Zustand der Fig. 2 einnimmt, liegt im Diagramm der Fig. 5 der Zustand I vor.

Dann, wenn kein regulärer Fluidverbrauch oder Wasserverbrauch vorliegt, sondern lediglich eine Leckage und wenn das Ventil 12 des erfindungsgemäßen Druckminderers 10 den Zustand der Fig. 3 einnimmt, folgt die Öffnungsbewegung bzw. der Öffnungshub X des Ventilstößels 15 dem Kurvenabschnitt 27 der Fig. 5. Eine relativ kleine Fluidentnahme oder Wasserentnahme bedingt dann einen relativ große Öffnungsbewegung X des Ventilstößels 15. Dies folgt aus der Steigung des Kurvenabschnitts 27. Diese kann mithilfe des dem Ventilstößel 15 zugeordneten, nicht gezeigten Sensors erfasst und detektiert werden.

Dann, wenn ein regulärer Fluidverbrauch oder Wasserverbrauch vorliegt, wenn also das Ventil 12 des Druckminderers 10 den Zustand der Fig. 4 einnimmt, folgt die Öffnungsbewegung bzw. der Öffnungshub X des Ventilstößels 15 dem Kurvenabschnitt 28 der Fig. 5. Eine relative große Fluidentnahme oder Wasserentnahme bedingt eine relativ kleine Öffnungsbewegung X des Ventilstößels 15. Dies folgt aus der Steigung des Kurvenabschnitts 28.

Im Zustand II der Fig. 5, in welchem der Kurvenabschnitts 27 in den Kurvenabschnitt 28 übergeht, beginnt das Dichtelement 24 sich von Dichtfläche 23 zu entfernen und beginnt den Strömungsbereich 25 vollständig freizugeben.

Der mindestens eine Strömungskanal 26, welcher die Dichtfläche 23 des an dem Ventilstößel 15 befestigten Ventilkörpers 22 an mindestens einer Umfangsposition unterbricht, kann eine beliebige Querschnittsfläche aufweisen, Fig. 6 bis 9 zeigen mögliche Querschnittsflächen für den mindestens einen Strömungskanal 26.

In Fig. 6 und 7 sind die Querschnittsflächen für den mindestens einen Strömungskanal 26 jeweils rechteckig konturiert. Entlang der Öffnungsbewegung X des Ventilstößels 15 und damit des Ventilkörpers 22 gesehen ist eine Breite B des jeweiligen Strömungskanals 26 über seine Länge L konstant, sodass sich dann der in Fig. 5 gezeigte lineare Kurvenabschnitt 27 ergibt. Die Steigung des Kurvenabschnitts 27 ist dabei umso flacher, je größer die in der Öffnungsbewegung des Ventilstößels 15 gesehen die Länge L der Querschnittsfläche des mindestens einen Strömungskanals 26 im Verhältnis zu seiner Breite B ist.

In Fig. 8 und 9 sind Querschnittsflächen für den mindestens einen Strömungskanal 26 gezeigt, bei welchen entlang der Öffnungsbewegung X des Ventilstößels 15 gesehen eine Breite B des jeweiligen Strömungskanals 26 über seine Länge L zunimmt. Der Kurvenabschnitt 27 würde dann einen parabelartigen Verlauf aufweisen.

Um einen Druckverlust über den Ventilkörper 22 bei Erreichen des Zustands II der Fig. 5 zu optimieren, ist es von Vorteil, wenn die Querschnittsfläche des mindestens einen Strömungskanal 26 so konturiert ist, dass entlang der Öffnungsbewegung X des Ventilstößels 15 gesehen die Breite B des jeweiligen Strömungskanals 26 zunimmt. Die Querschnittskonturierungen nach Fig. 8 und 9 für den mindestens einen Strömungskanals 26 sind demnach bevorzugt.

Wie Fig. 2, 3 und 4 entnommen werden kann, erstreckt sich der jeweilige die Dichtfläche 23 an einer jeweiligen Umfangsposition unterbrechende Strömungskanal 26 in Radialrichtung und ist vorzugsweise gegenüber der Axialrichtung schräg gestellt.

Im Unterschied zum gezeigten Ausführungsbeispiel ist es auch möglich, dass das Dichtelement 24 an einer radial äußeren Dichtfläche des Ventilkörpers 22 anliegt. In diesem Fall wirkt dann das Dichtelement 24 nicht mit der radial inneren Dichtfläche 23 sondern vielmehr mit einer radial äußeren Dichtfläche des zylindrisch oder hohlzylindrisch oder konisch konturierten Ventilkörpers 22 zusammen.

Die Erfindung ermöglicht es, eine Leckage, die sich stromabwärts des Druckminderers 10 ausbildet, sicher und einfach zu detektieren. Selbst eine relativ geringe Leckage, die im Hinterdruckraum 14 des Druckminderers 10 einen relativ geringen Druckverlust verursacht, bewirkt eine Bewegung des Ventilstößels 15 in einer Größenordnung, die sicher und zuverlässig detektiert werden kann.

### Bezugszeichenliste

- 10: Druckminderer
- 11: Gehäuse
- 12: Ventil
- 13: Vordruckraum
- 14: Hinterdruckraum
- 15: Ventilstößel
- 16: Membran
- 17: Federelement
- 18: Federteller
- 19: Federteller
- 20: Druckraum
- 21: Druckleitung
- 22: Ventilkörper
- 23: Dichtfläche
- 24: Dichtelement
- 25: Strömungsbereich
- 26: Strömungskanal
- 27: Kurvenabschnitt
- 28: Kurvenabschnitt

## Patentansprüche

1. Druckminderer (10),
mit einem Gehäuse (11), das einen Vordruckraum (13) und einen Hinterdruckraum (14) definiert,
mit einem in dem Gehäuse (11) positionierten Ventil (12),
wobei das Ventil (12) in geschlossenem Zustand den Vordruckraum (13) des Gehäuses (11) von dem Hinterdruckraum (14) des Gehäuses (11) trennt und in geöffnetem Zustand den Vordruckraum (13) und den Hinterdruckraum (14) verbindet,
wobei das Ventil (12) eine auf einen Ventilstößel (15) einwirkende Membran (16) aufweist, auf die unter Bereitstellung einer Druckminderer-Funktion einerseits eine in Öffnungsrichtung des Ventils (12) wirkende Federkraft eines Federelements (17) und andererseits eine in Schließrichtung des Ventils (12) wirkende, von einem im Hinterdruckraum (14) herrschenden Druck abhängige Kraft einwirkt,
wobei das Ventil (12) einen an dem Ventilstößel (15) befestigten Ventilkörper (22) mit einer Dichtfläche (23) aufweist, die mit einem Dichtelement (24) derart zusammenwirkt, dass im geschlossenen Zustand des Ventils (12) das Dichtelement (24) an der Dichtfläche (23) dichtend anliegt und gegen die Dichtfläche (23) drückt, und dass in geöffnetem Zustand des Ventils (12) das Dichtelement (24) von der Dichtfläche (23) entfernt ist und nicht an derselben anliegt, wobei in geöffnetem Zustand des Ventils (12) ein Strömungsbereich (25) zwischen dem Dichtelement (24) und der Dichtfläche (23) des Ventilkörpers (22) freigegeben ist,
**dadurch gekennzeichnet, dass**
die Dichtfläche (23) in Radialrichtung wirksam ist und der an dem Ventilstößel (15) befestigte Ventilkörper (22) unter Ausbildung der in Radialrichtung wirksamen Dichtfläche (23) zylindrisch oder hohlzylindrisch oder konisch konturiert ist, und
die Dichtfläche (23) des an dem Ventilstößel (15) befestigten Ventilkörpers (22) an mindestens einer Umfangsposition über mindestens einen Strömungskanal (26) derart unterbrochen ist, dass abhängig von einem im Hinterdruckraum (14) herrschenden Druckverlust, nämlich abhängig von einer durch eine Fluidleckage oder durch einen regulären Fluidverbrauch verursachten Druckänderung im Hinterdruckraum (14),
entweder das Dichtelement (24) an der Dichtfläche (23) anliegt und den Strömungsbereich (25) zwischen dem Dichtelement (24) und der Dichtfläche (23) einschließlich des jeweiligen Strömungskanals (26) vollständig verschließt, nämlich dann, wenn weder eine Fluidleckage noch ein regulärer Fluidverbrauch vorliegt und daher die Druckänderung im Hinterdruckraum (14) kleiner als ein unterer Grenzwert ist,
oder das Dichtelement (24) von der Dichtfläche (23) entfernt ist und den Strömungsbereich (25) zwischen dem Dichtelement (24) und der Dichtfläche (23) einschließlich des jeweiligen Strömungskanals (26) vollständig freigibt, nämlich dann, wenn ein regulärer Fluidverbrauch vorliegt und daher die Druckänderung im Hinterdruckraum (14) größer als ein oberer Grenzwert ist,
oder das Dichtelement (24) an der Dichtfläche (23) anliegt und den Strömungsbereich (25) zwischen dem Dichtelement (24) und der Dichtfläche (23) ausschließlich über den jeweiligen Strömungskanal (26) teilweise freigibt, nämlich dann, wenn kein regulärer Fluidverbrauch sondern lediglich eine Fluidleckage vorliegt und daher die Druckänderung im Hinterdruckraum (14) größer als der untere Grenzwert und kleiner als der obere Grenzwert ist.

2. Druckminderer nach Anspruch 1, **dadurch gekennzeichnet, dass** das Dichtelement (24) radial innen gegen eine radial innenliegende Dichtfläche (23) des Ventilkörpers (22) drückt.

3. Druckminderer nach Anspruch 1, **dadurch gekennzeichnet, dass** das Dichtelement (24) radial außen gegen eine radial außenliegende Dichtfläche des Ventilkörpers (22) drückt.

4. Druckminderer nach einem der Ansprüche 1 bis 3, **dadurch gekennzeichnet, dass** sich der mindestens eine Strömungskanal (26), der die Dichtfläche (23) an einer jeweiligen Umfangsposition unterbricht, in Radialrichtung erstreckt.

5. Druckminderer nach einem der Ansprüche 1 bis 4, **dadurch gekennzeichnet, dass** dem Ventilstößel (15) ein Sensor zugeordnet ist, welcher die Bewegung des Ventilstößels (15) erfasst.

## Claims

1. Pressure reducer (10)
having a housing (11) which defines an admission-pressure space (13) and a back-pressure space (14);
having a valve (12) positioned in the housing (11) ;
wherein the valve (12) in the closed state separates the admission-pressure space (13) of the housing (11) from the back-pressure space (14) of the housing (11), and in the opened state connects the admission-pressure space (13) and the back-pressure space (14);
wherein the valve (12) has a diaphragm (16) which acts on a valve tappet (15) and upon which act, while providing a pressure-reducer function, on the one hand, a spring force, acting in the opening direction of the valve (12), of a spring element (17) and, on the other hand, a force acting in the closing direction of the valve (12) and dependent on a pressure prevailing in the back-pressure space (14);
wherein the valve (12) has a valve member (22) which is fastened to the valve tappet (15) and has a sealing face (23) that interacts with a sealing element (24) in such a manner that the sealing element (24), in the closed state of the valve (12), bears in a sealing manner on the sealing face (23) and presses against the sealing face (23), and that the sealing element (24), in the opened state of the valve (12), is removed from the sealing face (23) and does not bear on the latter; wherein a flow region (25) between the sealing element (24) and the sealing face (23) of the valve member (22) is released in the opened state of the valve (12),
**characterized in that**
the sealing face (23) is effective in the radial direction, and the valve member (22), which is fastened to the valve tappet (15), while forming the sealing face (23) effective in the radial direction, is contoured so as to be cylindrical or hollow-cylindrical or conical; and
the sealing face (23) of the valve member (22) which is fastened to the valve tappet (15) at at least one circumferential position is interrupted by at least one flow duct (26) in such a manner that, dependent on a pressure loss prevalent in the back-pressure space (14), specifically dependent on a pressure change in the back-pressure space (14) caused by a fluid leakage or by a regular fluid consumption,
either the sealing element (24) bears on the sealing face (23) and completely closes off the flow region (25) between the sealing element (24) and the sealing face (23), including the respective flow duct (26), specifically when there is neither a fluid leakage nor a regular fluid consumption and the pressure change in the back-pressure space (14) is, therefore, less than a lower limit value, or
the sealing element (24) is removed from the sealing face (23) and completely releases the flow region (25) between the sealing element (24) and the sealing face (23), including the respective flow duct (26), specifically when there is a regular fluid consumption and the pressure change in the back-pressure space (14) is, therefore, higher than an upper limit value, or
the sealing element (24) bears on the sealing face (23), and partially releases the flow region (25) between the sealing element (24) and the sealing face (23) exclusively by way of the respective flow duct (26), specifically when there is no regular fluid consumption but only a fluid leakage and the pressure change in the back-pressure space (14) is, therefore, higher than the lower limit value and lower than the upper limit value.

2. Pressure reducer according to Claim 1, **characterized in that** the sealing element (24) presses radially inwards against a radially inner sealing face (23) of the valve member (22).

3. Pressure reducer according to Claim 1, **characterized in that** the sealing element (24) presses radially outwards against a radially outer sealing face of the valve member (22).

4. Pressure reducer according to one of Claims 1 to 3, **characterized in that** the at least one flow duct (26), which interrupts the sealing face (23) at a respective circumferential position, extends in the radial direction.

5. Pressure reducer according to one of Claims 1 to 4, **characterized in that** the valve tappet (15) is assigned a sensor which detects the movement of the valve tappet (15).

## Revendications

1. Réducteur de pression (10),
comprenant un boîtier (11) qui définit une chambre de pression amont (13) et une chambre de pression aval (14),
comprenant une vanne (12) positionnée dans le boîtier (11),
la vanne (12) séparant, à l'état fermé, la chambre de pression amont (13) du boîtier (11) de la chambre de pression aval (14) du boîtier (11) et reliant, à l'état ouvert, la chambre de pression amont (13) et la chambre de pression aval (14),
la vanne (12) présentant une membrane (16) agissant sur un poussoir de vanne (15), sur lequel agit, en fournissant une fonction de réducteur de pression, d'une part une force élastique d'un élément à ressort (17) agissant dans le sens d'ouverture de la vanne (12) et d'autre part une force dépendant d'une pression régnant dans la chambre de pression aval (14), agissant dans le sens de fermeture de la vanne (12),
la vanne (12) présentant un corps de vanne (22) fixé sur le poussoir de vanne (15) avec une surface d'étanchéité (23) qui coopère avec un élément d'étanchéité (24) de telle sorte qu'à l'état fermé de la vanne (12), l'élément d'étanchéité (24) repose de manière étanche contre la surface d'étanchéité (23) et appuie contre la surface d'étanchéité (23), et en ce que, à l'état ouvert de la vanne (12), l'élément d'étanchéité (24) est éloigné de la surface d'étanchéité (23) et ne s'applique pas contre celle-ci, une zone d'écoulement (25) étant libérée entre l'élément d'étanchéité (24) et la surface d'étanchéité (23) du corps de vanne (22) à l'état ouvert de la vanne (12),
**caractérisé en ce que**
la surface d'étanchéité (23) est active dans le sens radial et le corps de vanne (22) fixé sur le poussoir de vanne (15) a un contour cylindrique ou cylindrique creux ou conique pour former la surface d'étanchéité (23) active dans le sens radial, et
la surface d'étanchéité (23) du corps de vanne (22) fixé sur le poussoir de vanne (15) est interrompue en au moins une position périphérique par au moins un canal d'écoulement (26) de telle sorte qu'en fonction d'une perte de pression régnant dans la chambre de pression aval (14), à savoir en fonction d'une variation de pression dans la chambre de pression aval (14) provoquée par une fuite de fluide ou par une consommation régulière de fluide,
soit l'élément d'étanchéité (24) est en contact avec la surface d'étanchéité (23) et ferme complètement la zone d'écoulement (25) entre l'élément d'étanchéité (24) et la surface d'étanchéité (23), y compris le canal d'écoulement (26) correspondant, à savoir lorsqu'il n'y a ni fuite de fluide ni consommation régulière de fluide et que, par conséquent, la variation de pression dans la chambre de pression aval (14) est inférieure à une valeur limite inférieure,
soit l'élément d'étanchéité (24) est éloigné de la surface d'étanchéité (23) et libère complètement la zone d'écoulement (25) entre l'élément d'étanchéité (24) et la surface d'étanchéité (23), y compris le canal d'écoulement (26) correspondant, à savoir lorsqu'il y a une consommation régulière de fluide et que la variation de pression dans la chambre de pression aval (14) est donc supérieure à une valeur limite supérieure,
soit l'élément d'étanchéité (24) est en contact avec la surface d'étanchéité (23) et libère partiellement la zone d'écoulement (25) entre l'élément d'étanchéité (24) et la surface d'étanchéité (23) exclusivement par l'intermédiaire du canal d'écoulement (26) correspondant, à savoir lorsqu'il n'y a pas de consommation régulière de fluide mais uniquement une fuite de fluide et que la variation de pression dans la chambre de pression aval (14) est donc supérieure à la valeur limite inférieure et inférieure à la valeur limite supérieure.

2. Réducteur de pression selon la revendication 1, **caractérisé en ce que** l'élément d'étanchéité (24) exerce une pression radiale interne contre une surface d'étanchéité (23) radialement interne du corps de vanne (22).

3. Réducteur de pression selon la revendication 1, **caractérisé en ce que** l'élément d'étanchéité (24) appuie radialement à l'extérieur contre une surface d'étanchéité radialement externe du corps de vanne (22) .

4. Réducteur de pression selon l'une des revendications 1 à 3, **caractérisé en ce que** ledit au moins un canal d'écoulement (26), qui interrompt la surface d'étanchéité (23) en une position périphérique respective, s'étend dans la direction radiale.

5. Réducteur de pression selon l'une des revendications 1 à 4, **caractérisé en ce que** le poussoir de vanne (15) est associé à un capteur qui détecte le mouvement du poussoir de vanne (15).
